# EUROPEAN PATENT APPLICATION

(11) **EP 1 310 838 A1**
(43) Date of publication of application: **14.05.2003**
(21) Application number: 02024677.3
(22) Date of filing: 05.11.2002
(51) Int. Cl.: G03H 1/02, G03H 1/18, G07D 7/12, B23K 26/38

(54) **Semi-transparent hologram sheet and its fabrication method**

(30) Priority: 08.11.2001 JP 2001343554
(71) Applicant: SANKYO SEIKI MFG. CO. LTD., Suwa-gun Nagano (JP)
(72) Inventor: Yokozawa, Mitsuo, Suwa-gun, Nagano (JP)
(74) Representative: Rüger, Barthelt & Abel Patentanwälte

(57) **Abstract**

A metallic-deposition-type thermal hologram sheet (1) having laser evaporated portions (10) is provided. The hologram sheet includes a base sheet (2), a release layer (3), a hologram forming layer (4), and a metallic deposition layer (5). A portion of the metallic deposition layer is removed in a slit-like or mesh-like pattern by laser machining in order to form a pseudo-transparent or pseudo-semitransparent hologram sheet in the area (7) that contains the removed portions.

## Description

### Field of the Invention

The present invention relates to a metallic-deposition-type thermal hologram sheet, which is to be thermally transferred onto value-added media and the like to provide a forgery protection, and its fabrication method.

### Background of the Invention

Publicly known is an idea that a metallic-deposition-type thermal hologram sheet is adhered on surfaces of card media such as magnetic cards and IC cards, or on paper media such as bonds, coupons, and brand tags (all of these are collectively called "value-added media" in this specification) to provide a forgery protection to these value-added media and therefore to increase security.

The followings are conventional thermal hologram sheets used for a forgery protection: (a) a metallic-deposition-type hologram in which a grating pattern is more clearly viewed via a metallic deposition; (b) a transparent hologram in which a transparent continuous thin film layer, consisting of a metallic compound that has an index of refraction greater than that of a hologram layer, is formed with thickness of 1µm (10,000Å) or less on a relief forming surface of the hologram layer, as disclosed in Japanese Patent No. 2871476; (c) a partially transparent hologram formed such that, during the fabrication process of (a), a metallic deposition layer is partially washed away by etching, etc. and then a transparent deposition layer like (b) is formed.

Particularly the partially transparent hologram (c) that has both an area of the metallic deposition hologram and an area of the transparent hologram, when thermally transferred to cover given information such as amount columns in accounting sheets or mug shots, provides a forgery protection by emphasizing the hologram with the metallic deposition area and also prevents alteration by allowing the given information to be viewed through the transparent area.

As disclosed in Laid-open Japanese Patent No. H08-123299, a diffraction structure forming layer (metallic deposition layer) is transferred in a mesh-like pattern by a thermal printer, etc. to form a hologram, creating special effects by various designs.

However, the partially transparent hologram (c) requires extra steps such as masking printing, etching, and deposition. Moreover, it also requires a block copy for additional masking printing. The hologram of this type may be suitable for mass production, but not for flexible manufacturing.

With the diffraction structure disclosed in Laid-open Japanese Patent No. H08-123299, it is difficult for a thermal printer head to create a mesh-like pattern in high resolution, and also the hologram obtained has poor durability because it is transferred in a mesh-like pattern.

Then, an objective of the present invention is to provide a metallic-deposition-type thermal hologram sheet and its fabrication method, in which a transparent area can be partially formed in high resolution with less steps and which is suitable for flexible manufacturing.

### Brief Summary of the Invention

To achieve the objective, one aspect of the invention provides a metallic-deposition-type thermal hologram sheet that comprises of at least a base sheet, a release layer, a hologram forming layer, and a metallic deposition layer,

wherein a portion of the metallic deposition layer or a portion of the metallic deposition layer and a portion of a pre-formed heat-sensitive adhesive layer is removed in a slit-like or mesh-like pattern by laser machining in order to form a pseudo-transparent or pseudo-semitransparent hologram sheet in the area that contains the removed portions.

According to another aspect of the invention, a method for fabricating a metallic-deposition-type thermal hologram sheet is provided wherein a laser is partially illuminated onto a metallic-deposition-type thermal hologram sheet that comprises at least a base sheet, a release layer, a hologram forming layer, and a metallic deposition layer, and the laser-illuminated portion of the metallic deposition layer is evaporated in a slit-like or mesh-like pattern, but the hologram forming layer is kept intact in order to form a pseudo-transparent or pseudo-semitransparent hologram sheet in the area that contains the portion removed via evaporation.

The area that has the removed portions looks like a comb or a net from a microscopic view, in which the removed portion and the non-removed portion are alternately repeated. However, from a macroscopic view such as through the naked eye, the back of the metallic-deposition-type thermal hologram sheet is seen through as if it is transparent (or semi-transparent). Therefore, the area machined in such a manner functions as a pseudo-transparent sheet from a macroscopic viewpoint. On the other hand, the remaining portion of the metallic deposition layer, which was not removed, holds a hologram effect. Consequently, when the metallic-deposition-type thermal hologram sheet is positioned and thermally transferred onto a value-added medium such that the given information on the medium can be seen through, a forgery protection is provided, improving security of the value-added medium.

Further, the metallic-deposition-type thermal hologram sheet is processed in such a way that only the laser-illuminated portions are evaporated and removed to fabricate the transparent area (in other words, pseudo-transparent hologram sheet) without going through the steps of masking printing, etching, etc. Moreover, since the pseudo-transparent hologram sheet is formed by laser illumination, machining in high resolution is possible, and it is suitable for flexible manufacturing.

Also, such a metallic-deposition-type thermal hologram sheet or its fabrication method can present particular information by the shape of the pseudo-transparent hologram sheet.

In another aspect of the invention, a laser is illuminated onto the metallic-deposition-type thermal hologram sheet, on which a heat-sensitive adhesive layer is pre-formed, in order to evaporate portions of the metallic deposition layer and portions of the heat-sensitive adhesive layer, and using the remaining portion of the heat-sensitive adhesive, the metallic-deposition-type thermal hologram sheet is adhered. The laser-illuminated portions of the heat-sensitive adhesive layer have already been evaporated and removed together with the portions of the metallic deposition layer, however, when these portions are thermally transferred onto a value-added medium, the adhesive of the remaining portion of the heat-sensitive layer is pressed in such a way so as to spread it out so that the metallic-deposition-type thermal hologram sheet is adhered to the value-added medium.

In another aspect of the invention, in the method of fabricating a metallic-deposition-type thermal hologram sheet, the metallic deposition layer and the heat-sensitive adhesive layer around the periphery are removed by smearing (or etching) laser machining in order to form an outline of any shape. According to this fabrication method, the outline is set within a stamp size of a thermal transfer device to be used, and the unwanted portion that is outside the stamp outline may be removed in such as way as if it is smeared away'. As a result, the arbitrary outline that is created by laser machining can be stamped without changing the design of the hot stamp die. Even when the edge of the stamp die wears out and loses its sharpness, a sophisticated stamp result with no burr can still be obtained.

According to another aspect of the invention, it is also preferred that the laser output for drawing the outline be increased to the degree with which the hologram forming layer as well as the metallic deposition layer and the heat-sensitive adhesive layer are destroyed. In this case, the stamp obtains a sharp edge, preventing burr in cutting.

In another aspect of the invention, in the method of fabricating a metallic-deposition-type thermal hologram sheet, the ratio between the laser-illuminating area and The non-illuminating arca is freely changed in order to change the transmittance of the pseudo-transparent hologram sheet. With this, the shade of the pseudo-transparent hologram sheet may appear different to the naked eye.

In another aspect of the invention, in the method of fabricating a metallic-deposition-type thermal hologram sheet, a colored adhesive is applied partially or entirely after laser machining to form a colored heat-sensitive adhesive layer. As the colored adhesive is applied, the laser-machined area, that is, the area of the pseudo-transparent hologram sheet is colored to appear differently in color from the hologram sheet in the surrounding area.

In yet another aspect of the invention, in the method of fabricating a metallic-deposition-type thermal hologram sheet, a positioning mark for a grating image, which is provided on the metallic deposition layer, is detected, and a laser machining image is superposed onto the grating image. Thus, the grating image pattern and the laser machining image pattern are superposed in agreement with each other so that the effective expression can be created by a combination of the grating image and the transparent (or semi-transparent) drawing image, and also the portion of the metallic deposition layer excluding the diffraction grating can be precisely removed.

### Brief Description of the Drawings

Fig. 1 is a cross-sectional view of a metallic-deposition-type thermal hologram sheet of an embodiment of the present invention.

Fig. 2 is a cross-sectional view of a portion of a pre-machined unprocessed metallic-deposition-type thermal hologram sheet.

Fig. 3 is a cross-sectional view of the metallic-deposition-type thermal hologram sheet that is transferred onto a value-added medium and the incidence and reflection of the light on the sheet.

Fig. 4 is a diagram of a laser marking device.

Fig. 5 is a partial cross-sectional view of an example of an outline machining process.

Fig. 6 is a diagram showing a dimensional relationship between the metallic-deposition-type thermal hologram sheet and a stamp die.

Fig. 7 is a diagram showing an embodiment in which a laser-machined area is colored and superposed and adhered: Fig. 7(a) before superposition and adhesion and Fig. 7(b) after superposition and adhesion.

Fig. 8 is a diagram showing an example of a metallic-deposition-type thermal hologram sheet in which a pseudo-transparent hologram sheet is formed.

### Detailed Description of the Invention

The configuration of the present invention will be described hereinafter based on an example of the embodiments illustrated in the drawings.

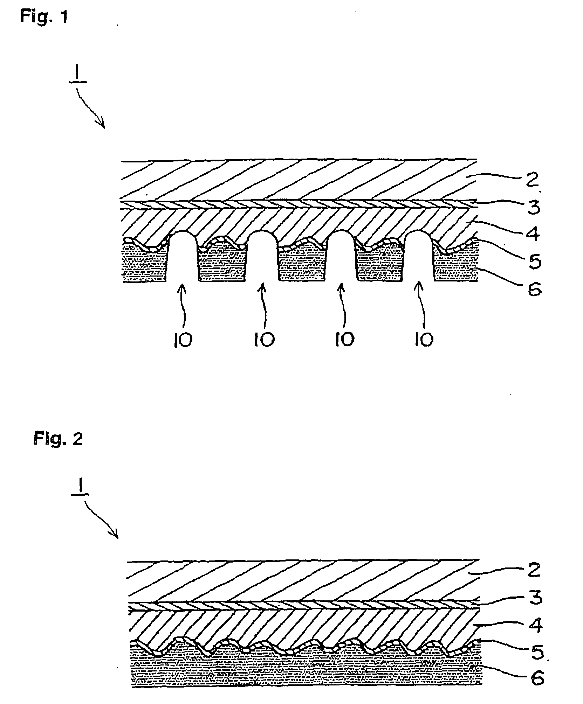

Figs. 1 through 4 illustrate an embodiment of the present invention. A metallic-deposition-type thermal hologram sheet 1 of the present invention comprises a base sheet 2, a release layer 3, a hologram forming layer 4, and a metallic deposition layer 5 joined together. In this embodiment, a heat-sensitive adhesive is also applied in advance on the bonding surface (on the side of the metallic deposition layer 5) to form a heat-sensitive adhesive layer 6. The metallic deposition layer 5 is a thin film layer formed by aluminum deposition, and a diffraction grating 5a formed at predetermined locations on the metallic deposition layer 5 reflects lights in a predetermined shape.

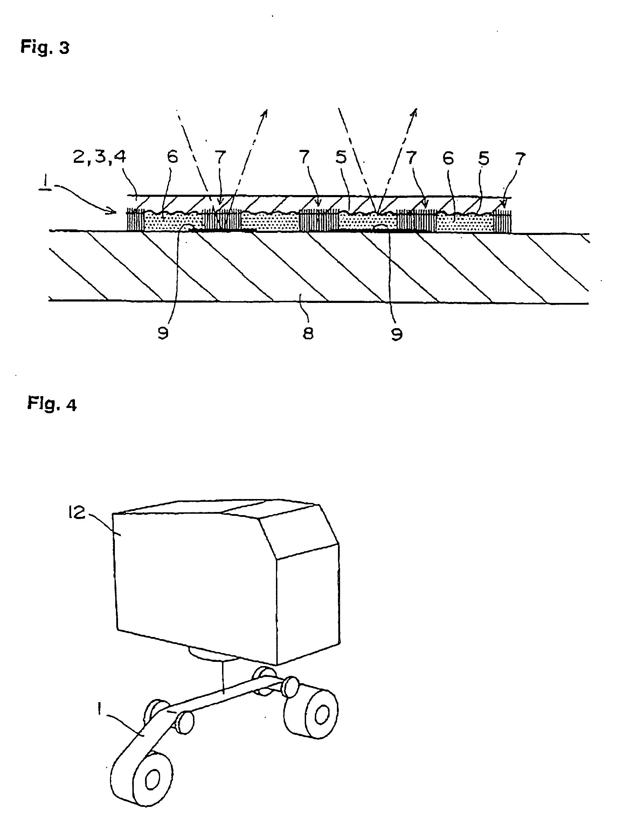

Portions of the metallic deposition layer 5 and portions of the heat-sensitive adhesive layer 6 of the metallic-deposition-type thermal hologram sheet 1 are removed in a slit-like pattern to create a comb-like shape. As illustrated in the magnification in Fig. 1, the width of a slit of the removed portion 10 is about 10µm and multiple slits are crowded in a predetermined area. The removed portion 10 and the remaining portion are arranged alternately at a constant pitch like a comb. Although the metallic deposition layer 5 is not entirely removed, naked eyes can see the slit-given area in only such a way that the back of the hologram sheet 1 is seen through as if transparent (or semitransparent), as illustrated in Fig. 3. Therefore, the area to which micro machining is given functions as a so-called pseudo-transparent hologram sheet 7 from a macroscopic viewpoint.

The partial removal of the metallic deposition layer 5 and the heat-sensitive adhesive layer 6 can be done by evaporating only the laser-illuminated portions through laser machining. Since laser machining can provide a high resolution, areas having complicated shapes or very narrow areas can be processed. For this reason, during the fabrication of the pseudo-transparent hologram sheet 7, fine designs, characters, or symbols can be formed. Also, the metallic deposition layer 5 can be machined leaving only the area of the diffraction grating 5a. The laser beam used here is of a wavelength that passes through the base sheet 2 and the hologram forming layer 4 but is absorbed by the metallic deposition layer 5. Specifically, a red wavelength laser beam or a near-infrared wavelength laser beam such as a YAG laser and a semiconductor laser is suitable. Note that, although not mentioned specifically, a method by a thermal printer head disclosed in Laid-open Japanese Patent S63-137287 can be used in place of laser machining.

An example of the steps in laser machining is described. A raw hologram sheet 1 has a layer structure having a sectional view as illustrated in Fig. 2. As illustrated in Fig. 4, a laser marking device 12 illuminates a laser light onto an area, on which a pseudo-transparent hologram sheet 7 is formed, from the side of the base sheet 2 in a slit-like pattern. At that time, portions of the hologram forming layer 4 can be evaporated and removed together with the portions of the metallic deposition layer 5 and heat-sensitive adhesive layer 6; however, a laser light is illuminated in such a way that the hologram forming layer 4 is not removed completely but at least some portions remain. Further, the output of the laser at that time is adjusted not to destroy the area of heat-sensitive adhesive layer 6 on which the laser is not illuminated (in other words, the portion that remains after machining).

When the hologram sheet 1 machined in the above manner is thermally transferred onto the value-added medium 8, the pseudo-transparent hologram sheet 7 is superposed onto given information 9 such that the information 9 (designs, symbols, numbers, etc.) can be seen through. The laser-illuminated portions of the heat-sensitive adhesive layer 6 have been evaporated together with the portions of the metallic deposition layer 5 (fig. 1). However, the adhesive of the remaining portions of the heat-sensitive adhesive layer 6 is pressed in order to spread it out when thermally transferred onto the value-added medium 8, so that the hologram sheet 1 is transferred. The pseudo-transparent hologram sheet 7 of the hologram sheet 1 from which the heat-sensitive adhesive layer 6 is partially removed can be transferred and adhered entirely.

With such a thermal transfer of the hologram sheet, the surface of the value-added medium 8 can be viewed by naked eyes from the slit-like windows, i.e., the pseudo-transparent hologram sheet 7, as if the sheet 7 is transparent (or scmitransparent), as illustrated in Fig. 3. Moreover, the given information 9 covered by the pseudo-transparent hologram sheet 7 cannot be altered for forgery unless the hologram sheet 1 is peeled off. Thus, high security can be given to the information 9. Note that an adhesive that becomes transparent after the heating and pressurizing is used for the heat-sensitive adhesive layer 6.

Also, when a laser is used as in this embodiment, the grating pattern and the laser machining pattern (the transparent machining pattern and the outline machining pattern) are superposed onto each other so that the portion of the metallic deposition layer 5 excluding the diffraction grating 5a can be precisely removed. Therefore, even when the diffraction grating 5a is formed all over the hologram sheet 1, the pseudo-transparent hologram sheet 7 can be formed leaving the gratings 5a intact. Thus, in the metallic-deposition-type thermal hologram sheet of this embodiment, the diffraction image created through the grating 5a after laser machining is the same as the one before the machining. The superposition of the above-mentioned patterns can be done in such a way that a positioning mark (hereinafter called as a registry mark) is given in advance during the machining of the diffraction grating 5a and the registry mark is detected and positioned with respect to the laser machining pattern during laser machining. Note that the registry mark is a guide for accurately showing the position of an image even when the distance is not constant, and the registry mark on the hologram sheet 1 is configured by the diffraction grating.

The shape and size of the pseudo-transparent hologram sheet 7 can be easily changed according to the given information 9 that is seen through it. Further, as machined in a particular shape, the pseudo-transparent hologram sheet 7 itself can present particular information. Specifically, the pseudo-transparent hologram sheet 7 may be shaped as a circle, rectangle, etc, for classification and may also be formed in a special shape that can be created by laser machining to increase added-value in order to increase security.

Note that the above-mentioned embodiment is an example of the preferred embodiments of the present invention, but can be varyingly modified within the scope of the present invention. For example, the pseudo-transparent hologram sheet 7 is formed in a predetermined position on the hologram sheet 1 in this embodiment; however, the periphery of the holograms sheet 1 may be machined to form an outline of arbitrary shape, according to the present invention.

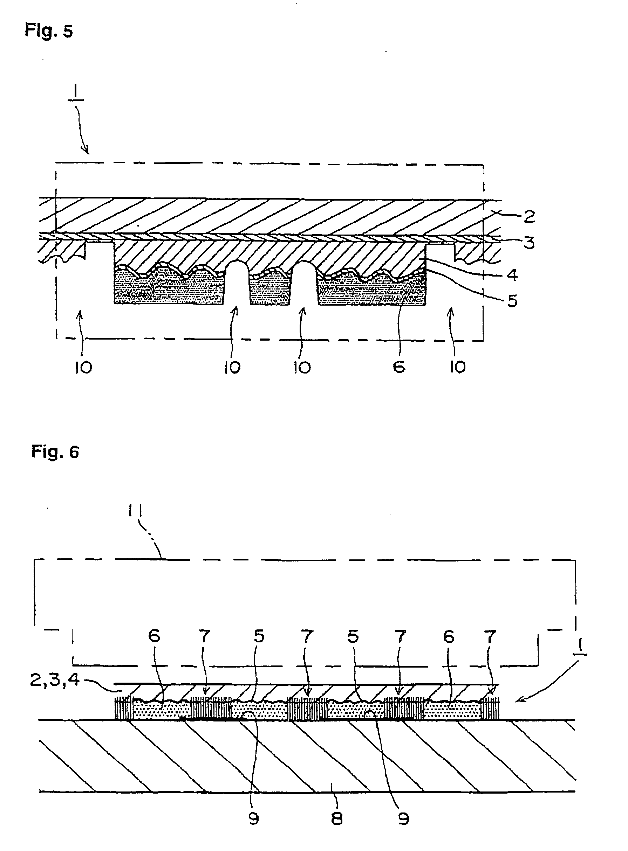

Then, an example of the outline machining process is described. Here, the metallic deposition layer 5 and the heat-sensitive adhesive layer 6 of the hologram sheet 1 around the periphery are removed through smearing (or etching) laser machining in order to form an outline of arbitrary shape. As illustrated in Fig. 5 and Fig. 6, the outline is determined within the stamp size of a thermal transcription device (indicated by an imaginary line in the Fig. 5), and the unwanted portion in the area outside the stamp outline can be removed by smearing (or etching) laser machining through laser illumination. Smearing (or etching) laser machining is a machining process that evaporates an unwanted portion by a laser of great output as if it smears away the portion. In this case, the unwanted and removed area has lost the heat-sensitive adhesive layer 6; therefore, it is not transferred onto the value-added medium 8. Thus, the arbitrary outline that is created through the laser machining process can be stamped without modifying the design of a hot-stamp die 11. Also, even when the edge of the stamp die 11 wears out and loses its sharpness, a highly sophisticated stamp result can be obtained. In addition, when the output of the laser beam that draws the outline is increased and adjusted to destroy not only the metallic deposition layer 5 and the heat-sensitive adhesive layer 6 but also the hologram forming layer 4, the edge will appear sharp when stamped, and thus preventing burr in cutting. The shape of the outline can be freely changed for each sheet during the laser machining process.

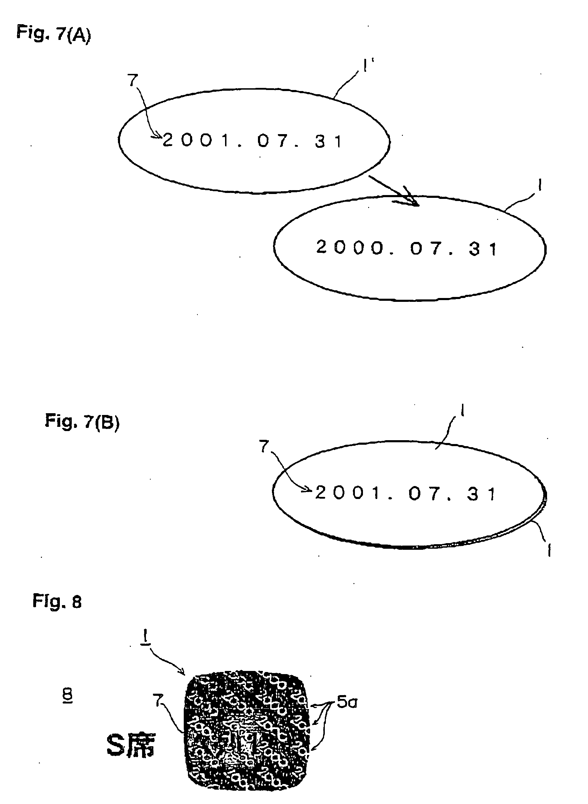

Although the heat-sensitive adhesive is not described in detail in this embodiment, a colored adhesive may be used as the heat-sensitive adhesive to form a colored heat-sensitive adhesive layer 6. For example, when an ink having a heat-sensitive adhesive property is applied on the back of the hologram sheet 1 and heat-pressed, the laser-machined area (i.e., the area of the pseudo-transparent hologram sheet 7) is colored by the ink to appear different in color from the hologram sheet in the surrounding area. Here is an example of the application of such a heat-sensitive adhesive layer 6. When the hologram sheet 1 that shows an expiring date (2000.07.31, for example) by the pseudo-transparent hologram sheet 7 in a unique shape is used, as illustrated in Fig. 7, a hologram sheet 1' that has a renewed expiration date (2001.07.31) thereon may be placed upon the hologram sheet 1. At that time, the old expiration date is covered and hidden behind, and only the new expiration date, which is on the top hologram sheet 1', can be viewed. Note that whether the colored adhesive should be applied partially or entirely on the hologram sheet 1 depends on the size of the pseudo-transparent hologram sheet 7 as compared with that of the hologram sheet 1.

Although portions of the metallic deposition layer 5 are removed in a slit-like pattern to form the pseudo-transparent hologram sheet 7 in this embodiment, the removing pattern is not limited to a slit-like pattern. For example, a laser beam may be illuminated onto one spot on the metallic deposition layer 5 and the illuminated spot is removed, and this machining may be repeated at equal intervals to form a mesh-like pattern. The mesh-like pattern can be created by spreading the illumination spots like a net or by arranging the illumination spots in squares like a checkerboard.

The distance between the laser illuminating portions can be changed no matter in what pattern the portions of the metallic deposition layer 5 are removed, slit or mesh. For example, the distance between the slits is set to 40µm and the line pitch to 100µm in this embodiment; however, the ratio between the area of the laser-illuminating portions and that of non-illuminated portions can be arbitrarily changed in order to change the transmittance of the pseudo-transparent hologram sheet 7 so that the degree of the shade appears different to the naked eye.

Further, the distance between the laser illuminating portions does not need to be constant in the pseudo-transparent hologram sheet 7. For example, the area ratio between the illuminating portions and the non-illuminating portions may be changed suddenly in order to change the contrast of the shade in stages, or the ratio may be changed gradually to form a so-called gradation pattern on the pseudo-transparent hologram sheet 7.

Also, a fine image or a common design on the pseudo-transparent hologram sheet 7 of the hologram sheet 1 is laser-machined in advance and a rough outline machining or a printing of peculiar information that does not require high resolution may be combined with a drawing by a thermal printer so that a hologram coating can be provided to increase security of the value-added medium 8. For example, it is preferred that the pseudo-transparent hologram sheet 7 may be processed with areas for printing mug shot, name, and card number in advance, having a logo of a card maker on the hologram sheet, and a thermal printer can be used to process IC contacts or a surface magnetic strip if there is any.

As illustrated in Fig. 8, the pseudo-transparent hologram sheet 7 is formed in a hologram sheet 1 in the shape of a square with rounded corners. Note that, as illustrated in the figure, the hologram sheet 1 is given the diffraction grating 5a that reflects multiple inclined letters of "2000". Therefore, the pseudo-transparent hologram sheet 7 is formed such that the diffraction grating 5a remains intact.

Used in this embodiment is a fiber laser (LP-F10 manufactured by SUNX Co.; 10W average output; 1.06µm peak wavelength), and laser machining is performed with the following conditions: a laser spot diameter (i.e., line width) is set to 60µm; a line pitch to 100µm; a laser output to 0.5 to 2 W; a pulse period to 10µsec; and a scanning speed to 3000mm/sec.

Next, the hologram sheet 1 is thermally transferred onto the value-added medium 8 such that the portion showing "Al", which is a part of the letters "S, Al" printed on the value-added medium 8, can be seen through it. As a result, the character information, "Al", which is covered by the pseudo-transparent hologram sheet 7 can be viewed though the hologram sheet 1 but cannot be altered. Furthermore, laser machining is performed so as to keep the diffraction grating 5a intact. For this reason, the character, "2000", remains intact whether it is the laser-machined portion or not; therefore, the value of the metallic-deposition-type thermal hologram sheet 1 is not affected.

According to the metallic-deposition-type thermal hologram sheet as discussed above, the laser-machined area, in which the removed portion and remaining portion are repeated alternately like a comb or a mesh in a microscopic view, looks transparent or semi-transparent to the naked eye; thus, a pseudo-transparent area is formed, providing a forgery protection to value-added media by emphasizing the presence of a hologram and preventing alteration by allowing the given information to be seen through the transparent area.

Also, because of laser machining, the process up to forming a transparent area (i.e., a pseudo-transparent hologram sheet) can be done with fewer steps and machining in high resolution is possible, which is suitable for a flexible manufacturing. In addition, the content of each machining process can be easily changed. Therefore, transparent holograms of different effects can be fabricated only by adjusting the output of a laser marking device and designing different drawing patterns. Although the data for laser machining is necessary, there is no need for creating a block copy. Consequently, a metallic-deposition-type thermal hologram sheet that is fabricated by mass production can be changed through a post machining process to a partially transparent hologram sheet that has a unique design for a small quantity (flexible manufacturing). For this reason, there is no need of managing stock per different user, but managing of the metallic-deposition-type thermal hologram sheets is enough.

According to another aspect of the invention, a unique shape of the pseudo-transparent hologram sheet presents particular information, improving security and facilitating classification.

According to the method of fabricating a metallic-deposition-type thermal hologram sheet, a metallic-deposition-type thermal hologram sheet is machined so as to contain a pseudo-transparent area so that a forgery protection is provided to value-added media and given information can be viewed through the transparent area to prevent alteration.

Also, because of laser machining, the process can be done with fewer steps and machining in high resolution is possible, which is suitable for flexible manufacturing. In addition, the content of each machining process can be easily changed. Therefore, transparent holograms of different effects can be fabricated only by adjusting the output of a laser marking device and designing different drawing patterns. Although the laser machining data is necessary, there is no need for creating a block copy. Consequently, a metallic-deposition-type thermal hologram sheet that is fabricated by mass production can be changed through a post machining process to a partially transparent hologram sheet that has a distinctive design for a small quantity (flexible manufacturing). For this reason, there is no need of managing stock per different user, but simply managing of the metallic-deposition-type thermal hologram sheets enough.

According to another aspect of the invention, the adhesive of the remaining portion of the heat-sensitive adhesive layer is pressed in order to spread it out when the metallic-deposition-type thermal hologram sheet is thermally transferred onto a value-added medium, and the hologram sheet is adhered. Therefore, the metallic-deposition-type thermal hologram sheet can be transferred and adhered such that the pseudo-transparent hologram sheet, in which the heat-sensitive adhesive layer is partially removed, can be entirely transferred and adhered. Further, there is no need of additional step of applying adhesive because of the adhesive from the heat-sensitive adhesive layer.

According to another aspect of the invention, the metallic deposition layer and the heat-sensitive adhesive layer around the periphery of the hologram sheet are removed through smearing (or etching) laser machining to form an outline of arbitrary shape. With this method, if a stamp die, which is larger than the machining area in the design, is used, there is no need of preparing a stamp die for each different outline. Only a standard stamp die is needed. The outline of the stamp can also be designed by laser machining.

According to another aspect of the invention, the laser output for drawing an outline is increased so as to destroy not only the metallic deposition layer and the heat-sensitive layer but also the hologram forming layer. Therefore, not only the stamp can obtain a sharp, clear edge, but also burr can be prevented in cutting.

According to another aspect of the invention, the ratio between the laser-illuminating area and the non-illuminating area may be freely changed in order to change the transmittance of the pseudo-transparent hologram sheet so that the degree of the shade can be changed. By changing the ratio suddenly, the contrast of the shade can be changed in stages; by changing the ratio gradually, a so-called gradation pattern can be created.

According to another aspect of the invention, a colored adhesive may be applied after the machining to form a colored heat-sensitive adhesive layer so that a colored pseudo-transparent hologram sheet can appear different in color from a hologram sheet in the surrounding area. For example, metallic-deposition-type thermal hologram sheets may be placed in layers so that the information on the hologram sheet on the first layer is hidden by that on the second layer.

According to another aspect of the invention, the shape of the pseudo-transparent hologram sheet can indicate particular information, improving security and facilitating classification.

According to yet another aspect of the invention, a positioning mark for a diffraction grating image provided on the metallic deposition layer is detected and the diffraction grating pattern and a laser machining image pattern are superposed onto each other so that only the portion of the metallic deposition layer excluding the diffraction grating can be precisely removed.

The foregoing specific embodiments represent just some of the ways of practicing the present invention. Many other embodiments are possible within the spirit of the invention. Accordingly, the scope of the invention is not limited to the foregoing specification, but instead is given by the appended claims along with their full range of equivalents.

## Claims

1. A metallic-deposition-type thermal hologram sheet comprising:
a base sheet;
a release layer joined to said base sheet;
a hologram forming layer joined to said release layer; and
a metallic deposition layer joined to said hologram forming layer;
wherein a portion of said metallic deposition layer, or a portion of said metallic deposition layer and a portion of a pre-formed heat-sensitive adhesive layer is removed in slit-like or mesh-like pattern by laser machining to form a pseudo-transparent or pseudo-semitransparent hologram sheet in the area that contains said removed portions.

2. The metallic-deposition-type thermal hologram sheet as set forth in Claim 1 wherein the shape of said pseudo-transparent hologram sheet presents particular information.

3. A method of fabricating a metallic-deposition-type thermal hologram sheet wherein a laser is partially illuminated to a metallic-deposition-type thermal hologram sheet that comprises a base sheet, a release layer, a hologram forming layer, and a metallic deposition layer, and said laser-illuminated portion of said metallic-deposition-type thermal hologram sheet is evaporated in a slit- or mesh-like pattern, but said hologram forming layer is kept intact in order to form a pseudo-transparent or pseudo-semitransparent hologram sheet in the area that contains said portion removed via evaporation.

4. The method of fabricating a metallic-deposition-type thermal hologram sheet as set forth in Claim 3 wherein a laser is illuminated onto said metallic-deposition-type thermal hologram sheet, on which a heat-sensitive adhesive layer is pre-formed, to evaporate a portion of said metallic deposition layer and a portion of said heat-sensitive adhesive layer, and by the heat-sensitive adhesive that has not evaporated but remained, said metallic- deposition-type thermal hologram sheet is adhered.

5. The method of fabricating a metallic-deposition-type thermal hologram sheet as set forth in Claim 4 wherein said metallic deposition layer and said beat-sensitive adhesive layer around the periphery are removed by smearing laser machining in order to form an outline of arbitrary shape.

6. The method of fabricating a metallic-deposition-type thermal hologram sheet as set forth in Claim 5 wherein a laser output for drawing an outline is increased so as to destroy not only said metallic deposition layer and said heat-sensitive adhesive layer but also said hologram forming layer.

7. The method of fabricating a metallic-deposition-type thermal hologram sheet as set forth in Claim 3 wherein the ratio between said laser-illuminating area and said non-illuminating area is changeable in order to change the transmittance of said pseudo-transparent hologram sheet.

8. The method of fabricating a metallic-deposition-type thermal hologram sheet as set forth in Claim 3 wherein a colored adhesive is partially or entirely applied after said laser machining is done, to form a colored heat-sensitive adhesive layer.

9. The method of fabricating a metallic-deposition-type thermal hologram sheet as set forth in Claim 3 wherein the shape of said pseudo-transparent hologram sheet presents particular information.

10. The method of fabricating a metallic-deposition-type thermal hologram sheet as set forth in Claim 3 wherein a positioning mark for a grating image, which is provided on said metallic deposition layer, is detected, and a laser machining image is superposed onto said grating image.

11. A metallic-deposition-type thermal hologram sheet comprising:
a base sheet;
a hologram forming layer disposed below the base sheet; and
a metallic deposition layer disposed below the hologram forming layer, the metallic deposition layer including a plurality of laser removed portions in a predefined pattern, the removed portions forming a partially transparent hologram sheet.

12. The hologram sheet according to claim 11, wherein the plurality of removed portions define a slit-like or mesh-like pattern.

13. The hologram sheet according to claim 11, wherein the predefined pattern includes a plurality of spaced apart areas and each area contains a plurality of the laser removed portions with each portion defining a slit.

14. The hologram sheet according to claim 11, further comprising a heat-sensitive adhesive layer disposed below the metallic deposition layer and including a plurality of laser removed portions in the predefined pattern.

15. A method of fabricating a metallic-deposition-type thermal hologram sheet in a partially formed sheet including a base sheet and a hologram forming layer disposed below the base sheet, the method comprising:
forming a metallic deposition layer below the hologram forming layer; and
illuminating by laser a plurality of removal portions of the metallic deposition layer in a slit-like or mesh-like pattern to evaporate the removal portions in order to form a partially transparent hologram sheet in the areas that contain the removal portions.

16. The method according to claim 15, further comprising:
forming a heat-sensitive adhesive layer below the metallic deposition layer;
wherein the step of illuminating by laser includes illuminating the metallic deposition layer and the heat-sensitive adhesive layer together to form the predefined pattern on both the metallic deposition layer and the heat-sensitive adhesive layer.

17. The method according to claim 15, further comprising, after the step of illuminating, applying a colored adhesive layer below the metallic deposition layer such that the areas that contain the removal portions appear differently in color from other areas.

18. The method according to claim 15, further comprising:
forming a grating image on the metallic deposition layer with a positioning mark;
wherein the step of illuminating by laser includes:
detecting the positioning mark for the grating image; and
superposing the predefined pattern with the grating image using the detected positioning mark.
